Europäisches Patentamt

European Patent Office

Office européen des brevets

(11) Publication number: **0 169 703**
**B1**

(12) **EUROPEAN PATENT SPECIFICATION**

(45) Date of publication of patent specification: 26.09.90

(21) Application number: 85305087.0

(22) Date of filing: 17.07.85

(51) Int. Cl.⁵: **G 06 F 15/21,** G 06 F 15/353, G 06 F 15/36

(54) A method of functional analysis.

(30) Priority: 20.07.84 GB 8418504

(43) Date of publication of application:
29.01.86 Bulletin 86/05

(45) Publication of the grant of the patent:
26.09.90 Bulletin 90/39

(84) Designated Contracting States:
AT BE CH DE FR GB IT LI LU NL SE

(56) References cited:

REGELUNGSTECHNIK UND PROZESS-
DATENVERARBEITUNG, vol. 22, no. 2, 1974,
pages 42-49, Munich, DE; V.H. NIEMANN: "Zur
linearen und nichtlinearen extrapolation
diskreter Zeitfunktionen"

IEEE TRANSACTIONS ON POWER APPARTUS
AND SYSTEMS, vol. PAS-103, no. 5, May 1984,
pages 1070-1076, IEEE, New York, US; H.L.
WILLIS et al.: "Load transfer coupling regression
curve fitting for distribution load forecasting"

(73) Proprietor: Georges, Bradford John
Newbridge House School Road
Upwell Norfolk (GB)

(72) Inventor: Georges, Bradford John
Newbridge House School Road
Upwell Norfolk (GB)

(74) Representative: Ellis, Edward Lovell et al
MEWBURN ELLIS & CO. 2/3 Cursitor Street
London EC4A 1BQ (GB)

(56) References cited:

ELEKTOR, vol. 5, no. 2, February 1979, pages
2-06 - 2-09, Canterbury, GB; L. GÜSE: "Pools
predictor 1, 2 or X based on statistics"

PATENT ABSTRACTS OF JAPAN, vol. 8, no. 133
(P-281)1570r, 20th June 1984; & JP-A-59 34 165
(FUJITSU K.K.) 24-02-1984

Courier Press, Leamington Spa, England.

## Description

The present invention relates to a method of systematically simulating and displaying the cyclical components of the behaviour of the movement of a curve represented by a plurality of plots relating two measured parameters to one another, by utilizing a computer to perform calculations in which the range of one of the measured parameters is extended to generate a prolongation of the curve. If this parameter is time, a prediction of future behaviour of the curve can be obtained.

The majority of prediction systems whether electronic or computerized rely on building into the system constraining factors which assist in obtaining a prediction of the likely results. For example, a pools predictor is disclosed in Elektor Vol 5, No. 2, February 1979. The electronic pools predictor disclosed in this article is based entirely on statistical analysis of the likely result of a game, the percentage chance of a game being 1,2 or X depending on the relative strengths of the two teams and their past performance.

Another type of prediction system is disclosed in the IEEE transactions on Power Apparatus and systems. This concerns the planning of distribution facilities which requires forecasts of future substation and feeder loads. The new technique proposed involves the extrapolation of curves involving a regression application.

Yet another type of system involving the use of moving averages is disclosed in the abstract of Japanese Patent Application No. 59-34165. This involves the method of removing ground noise from incoming seismographic signals by adding and subtracting a moving average value from a reference deviation value.

A more complicated method of prediction of discrete time functions is disclosed in "Regelungstechnik und progess-datenverarbeitung". This discloses that prediction by conditional expectation is possible for a large class of non-linear systems and that predicted values may be derived and easily computed.

In contrast the method disclosed in the present invention is based on a novel system involving a mathematical algorithm utilizing as a basis for prediction the moving average and oscillator of the curve whose future values it is desired to predict.

One application of the invention is the control of a variety of different types of manufacturing processes where it can be critical to predict the future movement of a particular parameter involved in the manufacturing process so as to be able to take immediate action to prevent said parameter exceeding or falling below predetermined critical values.

Another application of the invention is the generation of a data analysis of such curves. Such data analysis enables financiers and other monetary experts to predict future movements of stock, shares, bonds commodity prices and currency prices to enable them to advise their clients regarding the best moments in time to buy or sell any particular market or market group.

Generally speaking, the invention as set forth in claim 1 is based on a system of functional analysis which incorporates traditional moving averages and traditional oscillators to calculate dynamic moving averages which are akin to traditional exponential moving averages, and a basis of calculating these dynamic moving averages using descending Fibonacci ratios of the basic moving average.

The origin of the present invention lies in an algorithm which contains the following steps:

a) obtaining a moving average of a curve over a specified range of one of said parameters:

b) calculating the difference between the actual value of the curve and the moving average to produce an oscillator;

c) calculating the average of the oscillator over the same range of said one parameter;

d) adding the oscillator average to the moving average to produce a first dynamic moving average;

e) repeating the calculation of the average of the oscillator over a plurality of shorter ranges, each range being shorter than the last by a given ratio to produce a series of dynamic moving averages;

f) determining the maximum deviation of the curve from the moving average and also all the associated dynamic averages previously calculated;

g) using this maximum value of deviation to generate an envelope whose upper band for each point in the range is the sum of this value and the lowest value represented by the moving average or any of its associated dynamic moving averages at that point, and whose lower band for each point in the range, is calculated by subtracting this deviation value from the highest value represented either by the moving average or any one of its associated dynamic averages at that point;

h) generating a plurality of inner and/or outer envelopes by repeating the above process of envelope generation of step (g) using values of said maximum deviation related thereto by said given ratio and multiples of said given ratio; and

i) repeating all the above process steps in sequence using a plurality of ranges of moving average each said range being related to the said first range by said given ratio or a multiple of said given ratio.

Preferably said given ratio is the well known Fibonacci ratio (1.618), and the multiples thereof are power multiples.

The method may be applied to an industrial process having a time dependent parameter, wherein the parameter is sensed at spaced apart intervals of time to generate a plurality of plots of a first curve indicating the historical performance of the parameter as a function of time.

The present invention will now be described in greater detail by way of example with reference to the accompanying drawings, wherein:-

Fig. 1 is a graph illustrating how in the system the oscillator and a series of dynamic moving averages are obtained.

Fig. 2 is a graph showing the value of the U.S. Dollar against the Deutsche Mark over the period 1975—1983 together with five dynamic moving averages and three envelopes derived according to the method of the present invention.

Figures 3A and 3B are graphs of curves showing how the market in fact moved after a prediction was made from the curves shown in Figure 3A; and

Figure 4 is a block diagram of a computer controlled cooling system applicable to an industrial process.

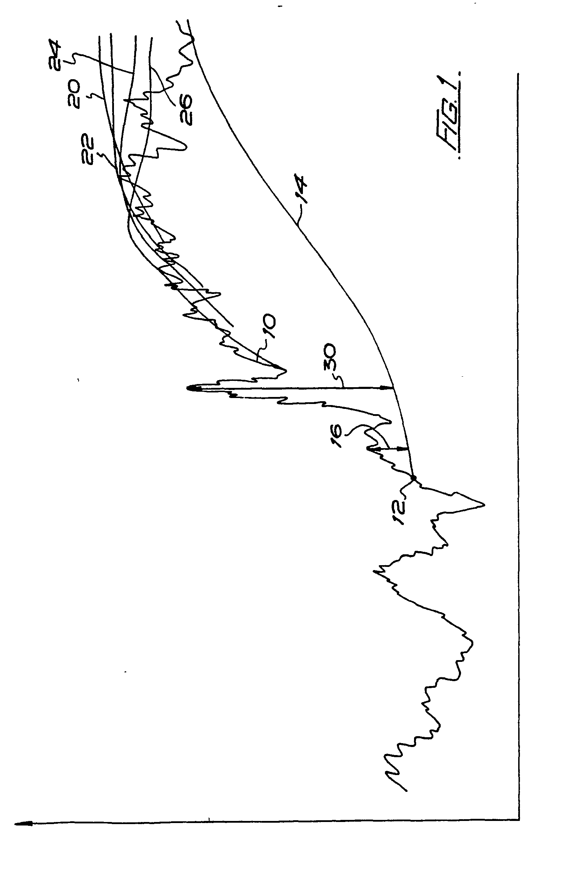

Referring first to Figure 1, the curve whose magnitude is plotted as ordinate to a base of time is shown at 10. Point 12 represents the average of the last 233 plots along the abscissa axis. From this information it is possible to derive a moving average of the curve 10 represented by the smooth curve 14. Each point on the moving average curve is calculated using only the last 233 plots of the curve 10 immediately preceding the point in question on the curve 14. It will be noted that the value of the curve 14 lags behind that of the curve 10 over the substantial rise in magnitude thereof after the point of first calculation 12. At any given points having the same time (same values of abscissa), the difference in value 16 is the oscillator. By using the average of the oscillator (not shown) over a period which includes the same number of plots, the first dynamic moving average 20 is obtained by adding this moving average of the oscillator to the moving average. Likewise by using the average of the oscillator over a plurality of shorter periods using a number of plots which are related to the previous number 233 divided by the Fibonacci factor (1.618) and power multiples of this factor (i.e. 144,89,55 etc.), a further series of dynamic moving averages 22, 24 and 26 are obtained as above.

A first envelope having upper and lower bands is generated using the value 30 of maximum deviation of the parameter from either the moving average or any of the dynamic moving averages, over the total range of the parameter being analyzed.

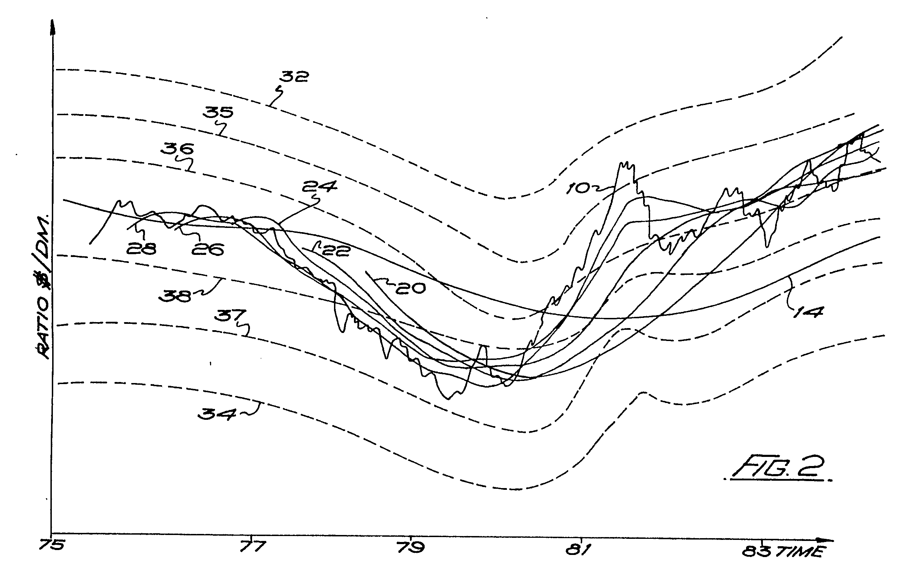

Referring now to Figure 2 which is a specific example of how the value of the U.S. dollar fluctuated against the German Deutsche Mark over the period 1975 to 1983, the curves shown whose calculation has been outlined above include the moving average 14 and a series of five dynamic moving averages 20, 22, 24, 26 and 28, as well as the actual value 10.

The upper and lower bands of the first envelope are shown by the curves 32 and 34 respectively. The upper band 32 is the sum of the maximum value of deviation and the lowest value represented by the moving average 14 or any of the dynamic moving averages 22, 24, 26 and 28 along each point of the abscissa. The lower band 34 is determined by subtracting the maximum value of deviation from the highest value represented either by the moving average 14 or any one of the associated dynamic moving averages 20, 22, 24, 26 and 28 along each point of the abscissa.

Two further inner envelopes having respective upper bands 35 and 36 and respective lower bands 37 and 38 are generated by repeating the above process of envelope generation using values of said maximum deviation related thereto and multiplying it repeatably by the Fibonacci ratio; (i.e. by 1.618 or 0.618).

Although the above example shows only the generation of two further inner envelopes, it will be appreciated that more may be generated if required as well as a plurality of outer envelopes.

Next, all the above process steps are sequentially repeated using a plurality of ranges of moving average, each said range (number of plots or length of time) being related to said first range by the Fibonacci ratio and sequentially by power multiples of said Fibonacci ratio.

Having generated the series of envelopes over the plurality of ranges of the moving average, the user can now display on the video display unit of the computer system, the original parameter, the moving average, the dynamic moving averages, the series of upper and lower envelopes for the first range of the moving average, by depressing the appropriate key on the manual keyboard associated with the computer. After the user has studied this display, he can now repeat the above process by depressing systematically in turn the keys which cause the ranges of moving average to be displayed on the video display unit, said ranges being related to the first displayed range by the Fibonacci factor and power multiples of the Fibonacci factor.

By carefully studying all the displayed information, the user can then predict the future movement of the parameter. Experience has shown that this can be done with a very considerable degree of probability over the time frame to which the displayed moving average, dynamic moving averages and envelopes apply.

Alternatively, instead of the user making an assessment using all the information obtained and displayed by the above steps, the computer may then be required to make a predicted calculation of the future movement of the parameter. The user can thus depress the appropriate key on the keyboard, which will enable the computer to carry out the necessary prediction of the future movement of the parameter over any desired future range in time and to display this movement of the parameter together with the other associated curves, e.g. the moving average, the dynamic moving averages and the envelopes on the video display unit. As will be explained later, the computer can be programmed to assess the situation and make an appropriate decision which can be output in visual form on the screen of the video display unit as whether the future movement of the parameter is "up", "down" or "steady" and in the case of the first two an approximate evaluation of the change of magnitude over a required period of time.

Thus it will be appreciated from the above description that in the case of the financial application of the invention, it is thus possible for the user to predict, whether using his own experience or with the aid of the computer, with very considerable accuracy the movements of any or a selected group of stocks, shares, bonds, commodity and currency. In this way the user of the system is able to advise his Clients when they should sell or buy their respective holdings.

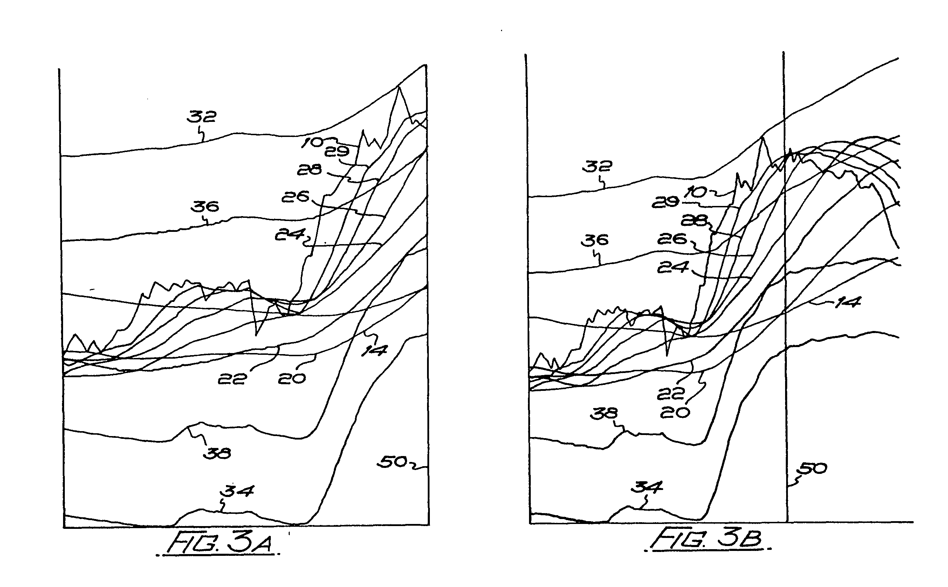

The financial application will now be discussed in greater detail by way of an example shown in Figures 3A to 3E.

Referring first to Figure 3A, the graph shows the price of the holding plotted to a base time, this being shown by the curve 10 (the parameter of Figure 1), the moving average 14, six dynamic moving averages 20, 22, 24, 26, 28 and 29, and pairs of upper and lower envelopes 32, 34 and 36, 38. If you observe the way the moving average 14 has behaved, you will note that the long term trend is turning from down to up. The price shown by curve 10 has rallied to the upper outer envelope 32 and the moving dynamic averages are all well splayed out at the current point in time indicated by the line 50.

You should further note that the price shown by the curve 10 having bounced off the upper outer envelope 32 has cut through the two shorter term dynamic moving averages 29 and 28. At this point you can sell the holding, and make quite a reasonable short term gain if you had bought it at the start of the graph when the price as shown by the curve 10 was well below the moving average 14.

Figure 3B shows how the various curves in fact moved beyond the line 50, and it will be noted that although the price tried to break through the dynamic moving average 29 two times, it subsequently fell sharply and was rapidly approaching the moving average 14. In other words it was an excellent time to sell.

With sufficient practice, it becomes an easy matter to quickly spot, with the aid of the various ranges of moving averages using the Fibonacci ratio and power multiples thereof, when the price of the holding is likely to rise or fall and thus make an assessment as whether to buy or sell. All the necessary information relating to the curves can be stored within the memories of the computer, so that the computer can itself make an appropriate assessment of the situation and give a visual indication via the visual display unit of the predicted change in the price of the holding, i.e. whether "up" or "down" and also by what magnitude. Hence the user with the aid of the computer print out can make a quick decision as to whether to buy or sell that particular holding.

In the case of the industrial application the value of a particular parameter, e.g. the temperature of a coolant liquid, can be continually monitored throughout the production or a continuous production process. By using the above process, the user would be able to predict in advance when the temperature was going to exceed a given critical and take appropriate action to prevent such an occurrence which could give rise to dangerous or explosive conditions causing damage and/or injury to personnel.

There are thus considerable opportunities of using the system of functional analysis in all parts of the industrial world as well as in many other fields, e.g. the medical field where a patient's blood pressure can be continuously monitored.

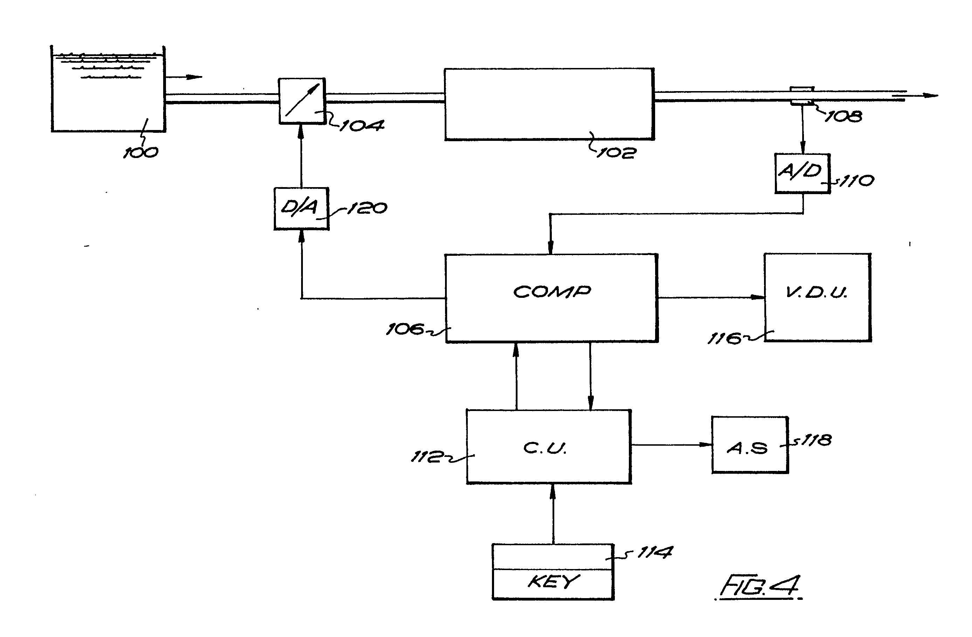

A general industrial application of the system of functional analysis will now be described in greater detail with reference to Figure 4.

Referring now to Figure 4, the basic layout of a system, which is capable of systematically simulating and displaying the cyclical component of the behaviour of the temperature of a coolant liquid in an industrial process, is shown in block form.

In this example of industrial application, the temperature of a coolant liquid is to be monitored, to ensure that it does not either exceed a given temperature or fall below a given temperature, so that the products of the manufacturing process emerge without defect. Cooling liquid from a reservoir 100 is pumped to a chamber 102 in which the manufactured products are housed by means of a pump 104 whose speed of pumping can be varied. A computer 106 receives the value of the temperature of the coolant liquid output from the chamber 102 from the sensor 108, via an analog-to-digital converter 110 which converts the value of the temperature into digital form. A control unit 112 is in two way communication with computer 106. A manual unit 114 including a keyboard provides the control unit with information to control the computer 106.

The system also includes a video display unit (V.D.U.) 116 on which the temperature of the coolant liquid, the moving average, the dynamic moving averages, and the various pairs of envelopes relating to the temperature of the coolant liquid can be displayed. An alarm system 118 can be provided to give a visual and/or audible indication that the predicted position of the temperature of the coolant liquid will in the near future, either exceed the upper temperature limit or fall below the lower temperature limit.

The rate of flow of the coolant liquid is controlled by means of the pump 104, the speed of whose motor is controlled by the computer 106 through a digital-to-analog converter 120.

The operator in charge of the system has the manual unit 114 and keyboard together with the V.D.U. 116 in front of him. He can thus continually monitor and display on the V.D.U. 116, the cyclical components of the behaviour of the movement of the temperature of the coolant liquid. If he is on manual operation he can input instructions into the control unit 112 to enable the computer 106 to control the pump 104 via the digital-to-analog converter 120, so as to increase or decrease the rate of flow of the coolant liquid in the event that a prediction of the future movement of the temperature brings it close to one of the limit temperatures.

If the operator decides to hand over to the computer he operates the manual/automatic control button on the keyboard of the manual unit 114. The computer 106 now takes over and controls the rate of flow of the coolant liquid by means of the pump 104 according to the prediction it makes using appropriate information stored in its memory regarding the interpretation of the moving average, the dynamic moving averages and the pairs of envelopes from the various ranges derived from the Fibonacci factor and power multiples thereof.

## Claims

1. A method of generating with a digital computer a data analysis of the cyclical behaviour of a curve represented by a plurality of plots relating two parameters to one another, said method including the steps of: loading into said computer (106) initial data comprising a set of values for each of said parameters, said sets defining said curve (10) if represented graphically; calculating with said computer (106) a moving average (14) of said curve (10) over a specified range of one of said parameters; calculating with said computer (106) the difference between the actual value of the curve (10) and the moving average (14) to produce an oscillator (30); calculating with said computer (106) the average of the oscillator (30) over the same range of said one parameter; and adding with said computer (106) this oscillator average (30) to the moving average (14) to produce a first dynamic moving average (20);

said method additionally including the following steps:

(a) repeating the calculation with said computer (106) of the average of the oscillator (30) over a plurality of shorter ranges, each range being shorter than the last by a given ratio to produce a series of dynamic moving averages (22, 24, 26, 28, 29);

(b) determining with said computer (106) the maximum deviation of the curve (10) from the moving average (14) and also all the associated dynamic moving averages (20, 22, 24, 26, 28, 29) previously calculated;

(c) using this maximum value of deviation to generate with said computer (106) an envelope whose upper band (32) for each point in the range is the sum of this value and the lowest value represented by the moving average (14) or any of its associated dynamic moving averages (20, 22, 24, 26, 28, 29) at that point, and whose lower band (34) for each point in the range, is calculated by subtracting this deviation value from the highest value represented either by the moving average (14) or any one of its associated dynamic moving averages (20, 22, 24, 26, 28, 29) at that point;

(d) generating with said computer (106) a plurality of inner and/or outer envelopes (35, 37; 36, 38) by repeating the above process of envelope generation of step (c) using values of said maximum deviation related thereto by said given ratio and multiples of said given ratio;

(e) repeating all the above process steps in sequence using a plurality of ranges of moving average (14) each said range being related to the said first range by said given ratio or a multiple of said given ratio;

(f) storing data in said computer (106) comprising each set of lines which includes the moving average (14), its associated moving averages (20, 22, 24, 26, 28, 29) and envelopes (35, 37; 36, 38);

(g) systematically repeating method step (f) according to said given ratio and multiples of said given ratio and storing in said computer (106) the data generated thereby; and

(h) extending the range of said one parameter for displaying on a visual display unit (116) of said computer (106) the prolongation of said curve.

2. A method according to claim 1, characterized in that the range of said one parameter is extended by equally spaced apart increments representing time where said prolongation of said curve represents a prediction of the value of said other parameter.

3. A method according to any one of the preceding claims, characterized in that said given ratio is the Fibonacci factor (1.618) and the multiples thereof are power multiples.

4. A method according to any one of the preceding claims, characterized in that said method is applied to an industrial process having a time dependent parameter, wherein said parameter is sensed at spaced apart intervals of time to generate a plurality of plots of a first curve (10) indicating the historical performance of said parameter as a function of time.

5. A system for carrying out the method according to claim 4 in the case where it is necessary to prevent some parameter exceeding or falling below a predetermined value, characterized in that the system includes:

(a) means (108) for monitoring the analog value of said parameter;

(b) means (110) for converting said analog value into a digital value;

(c) means for inputting said value into the computer (106);

(d) means (112, 114) for programming said computer (106) to carry out said method in accordance with specific requirements;

(e) means (104) for effecting an adjustment of the analog value in the event that the computer (106) outputs a signal indicating that the value of said parameter, will probably exceed or fall below said predetermined value; and

(f) means (112, 114) for generating control signals to effect an adjustment of said parameter having studied the various sets of lines displayed on the screen of the video display unit (116), or allow the computer (106) to perform such adjustment automatically.

## Patentansprüche

1. Verfahren zur Erstellung einer Datenanalyse des zyklischen Verhaltens einer Kurve, die durch eine Vielzahl von Kurvenwerten dargestellt ist, die zwei Parameter zueinander in Beziehung setzen, mittels eines Digitalrechners, das genannte Verfahren umfassend die Schritte: Laden von Anfangsdaten umfassend einen Satz von Werten für jeden der genannten parameter in den genannten Computer (106), wobei die genannten Sätze, wenn sie graphisch dargestellt sind, die genannte Kurve (10) definieren; Berechnen eines veränderlichen Durchschnittswertes (14) der genannten Kurve (10) über einen spezifischen Bereich eines der genannten Parameter mittels des genannten Computers (106); Berechnen der Differenz zwischen dem tatsächlichen Wert der Kurve (10) und dem veränderlichen Durchschnittswert (14) mittels des genannten Computers (106), um einen Oszillator (30) zu erzeugen; Berechnen des Durchschnittswertes des Oszillators (30) über den gleichen Bereich des genannten einen Parameters mittels des genannten Computers (106); und Addieren dieses Oszillatordurchschnittswertes (30) zum veränderlichen Durchschnittswert (14) mittels des genannten Computers (106), um einen ersten dynamischen veränderlichen Durchschnittswert (20) zu erzeugen;

das genannten Verfahren zusätzlich folgende Schritte umfassend:

(a) Wiederholung der Berechnung mit dem genannten Computer (106) des Durchschnittswertes des Oszillators (30) über eine Vielzahl von kürzeren Bereichen, wobei jeder Bereich kürzer als der vorhergehende um ein vorgegebenenes Verhältnis ist, um eine Reihe von dynamischen veränderlichen Durchschnittswerten (22, 24, 26, 28, 29) zu erzeugen;

(b) Bestimmen mit dem genannten Computer (106) der maximalen Abweichung der Kurve (10) vom veränderlichen Durchschnittswert (14) und auch allen vorher berechneten zugeordneten dynamischen veränderlichen Durchschnittswerten (20, 22, 24, 26, 28, 29);

(c) Verwendung dieses maximalen Wertes der Abweichung, um mit dem genannten Computer (106) eine Hüllkurve zu erzeugen, deren oberes Band (32) für jeden Punkt im Bereich die Summe dieses Wertes und des geringsten Wertes ist, der durch den veränderlichen Durchschnittswert (14) oder jeden beliebigen seiner dynamischen veränderlichen Durchschnittswerte (20, 22, 24, 26, 28, 29) in diesem Punkt dargestellt ist und deren unteres Band (34) für jeden Punkt in dem Bereich berechnet wird, indem dieser Abweichungswert vom höchsten Wert subtrahiert wird, der entweder durch den veränderlichen Durchschnittswert (14) oder jeden beliebigen seiner zugeordneten dynamischen veränderlichen Durchschnittswerte (20, 22, 24, 26, 28, 29) in diesem Punkt dargestellt ist;

(d) Erzeugen mit dem genannten Computer (106) einer Vielahl von inneren und/oder äußeren Hüllkurven (35, 37; 36, 38) durch Wiederholung des vorstehend beschriebenen Prozesses der Hüllkurvenerzeugung nach Schritt (c) unter Verwendung von Werten der genannten maximalen Abweichung, die dazu durch das genannte vorgegebene Verhältnis und Vielfache des genannten vorgegebenen Verhältnisses in Beziehung gesetzt werden;

(e) Wiederholen aller vorstehend beschriebener Verfahrensschritte in Reihenfolge unter Verwendung einer Vielzahl von Bereichen des veränderlichen Durchschnittswertes (14), wobei jeder der genannten Bereiche zum genannten ersten Bereich durch das genannte vorgegebene Verhältnis oder ein Vielfaches des genannten vorgegebenen Verhältnisses in Beziehung gesetzt wird;

(f) Speichern on Daten im genannten Computer (106) umfassend jeden Satz von Linien, die den veränderlichen Durchschnittswert (14), seine zugeordneten veränderlichen Durchschnittswerte (20, 22, 24, 26, 28, 29) und Hüllkurven (35, 37; 35, 38) einschließen; (g) systematisches Wiederholen des Verfahrensschrittes (f) gemäß dem genannten vorgegebenen Verhältnis und Vielfachen des genannten vorgegebenen Verhältnisses und Speichern der dazu erzeugten Daten im genannten Computer (106); und

(h) Erweiterung des Bereiches des genannten einen parameters für die Anzeige der Verlängerung der genannten Kurve auf einer visuellen Anzeigeeinheit (116) des genannten Computers (106).

2. Verfahren nach Anspruch 1, dadurch gekennzeichnet, daß der Bereich des genannten einen Parameters durch in gleichen Abständen voneinander entfernte Inkremente erweitert wird, die Zeit darstellen, wenn die genannte Verlängerung der genannten Kurve eine Vorhersage des Wertes des genannten anderen Parameters darstellt.

3. Verfahren nach einem der vorhergehenden Ansprüche, dadurch gekennzeichnet, daß das genannte vorgegebene Verhältnis der Fibonacci-Faktor (1,618) ist und die Vielfachen desselben Potenzvielfache sind.

4. Verfahren nach einem der vorhergehenden Ansprüche, dadurch gekennzeichnet, daß das genannte Verfahren auf ein industrielles Verfahren angewendet wird, das einen zeitabhängigen Parameter aufweist, worin der genannte Parameter in in Abständen voneinander entfernten Zeitintervallen detektiert wird, um eine Vielzahl von Kurvenwerten einer ersten Kurve (10) zu erzeugen, die die geschichtliche bzw. über die Zeit betrachtete Darstellung des genannten Parameters als Funktion der Zeit anzeigt.

5. System zur Durchführung des Verfahrens nach Anspruch 4, für den Fall, daß es nötig ist, das Über/oder Unterschreiten eines vorgegebenen Wertes durch einen der Parameter zu verhindern, dadurch gekennzeichnet, daß das System umfaßt:

(a) Einrichtungen (108) zur Überwachung des Analogwertes des genannten Parameters;

(b) Einrichtungen (110) zur Umwandlung des genannten Analogwertes in einen Digitalwert;

(c) Einrichtungen zum Eingeben des genannten Wertes in den Computer (106);

(d) Einrichtungen (112, 114) zum Programmieren des genannten Computers (106), um das genannte Verfahren gemäß spezifischen Anforderungen durchzuführen;

(e) Einrichtungen (104) zur Durchführung einer Einstellung des Analogwertes, falls der Computer (106) ein Signal ausgibt, das anzeigt, daß der Wert des genannten Parameters wahrscheinich den genannten vorgegebenen Wert über- oder unterschreiten wird; und

(f) Einrichtungen (112, 114) zur Erzeugung von Steuersignalen, um eine Einstellung des genannten Parameters nach Studium der verschiedenen Sätze von Linien durchzuführen, die auf dem Bildschirm der Videoanzeigeeinheit (116) angezeigt sind, oder dem Computer (106) zu ermöglichen, eine solche Einstellung automatisch durchzuführen.

## Revendications

1. Procédé pour réaliser avec un ordinateur numérique une analyse de données du comportement cyclique d'une courbe représentée par une pluralité de points ou de tracés concernant deux paramètres l'un par rapport à l'autre, ledit procédé comportant les opérations de charger dans ledit ordinateur (106) des données initiales comprenant un jeu de valeurs pour chacun desdits paramètres, lesdits jeux définissant ladite courbe (10) lorsque représentée graphiquement; de calculer à l'aide dudit ordinateur (106) une moyenne mouvante (14) de ladite courbe (10) dans une gamme spécifiée de l'une desdits paramètres; de calculer à l'aide dudit ordinateur (106) la différence entre la valeur actuelle de la courbe (10) et la moyenne mouvante (14) pour produire un oscillateur (30); de calculer avec ledit ordinateur (106) la moyenne de l'oscillateur (30) sur la même gamme de ce paramètre; et d'additionner à l'aide dudit ordinateur (106) cette moyenne d'oscillateur (30) à la moyenne mouvante (14) pour produire une première moyenne mouvante dynamique (20);

ledit procédé comprenant en outre les opérations suivantes:

(a) de répéter le calcul avec ledit ordinateur (106) de la moyenne de l'oscillateur (30) dans une pluralité de gammes plus étroites, chaque gamme étant plus étroite que la dernière selon un rapport donné pour produire une série de moyennes mouvantes dynamiques (22, 24, 26, 28, 29);

(b) de déterminer avec ledit ordinateur (106) la déviation maximale de la courbe (10) de la moyenne mouvante (14) et également de toutes les moyennes mouvantes dynamiques associées (20, 22, 24, 26, 28, 29) antérieurement calculées;

(c) d'utiliser cette valeur maximale de déviation pour engendrer avec ledit ordinateur (106) une enveloppe dont la bande supérieure (32) pour chaque point dans la gamme est la somme de cette valeur et de la valeur la plus faible représentée par la moyenne mouvante (14) ou l'une quelconque de ses moyennes mouvantes dynamiques associées (20, 22, 24, 26, 28, 29) à ce point, et dont la bande inférieure (34) pour chaque point dans la gamme est calculée par soustraction de cette valeur de déviation de la valeur la plus élevée représentée soit par la moyenne mouvante (14) ou par l'une quelconque de ses moyennes mouvantes dynamiques associées (20, 22, 24, 26, 28, 29) à ce point;

(d) d'engendrer avec ledit ordinateur (106) une pluralité d'enveloppes intérieures et/ou extérieures (35, 37; 36, 38) en répétant le procédé susmentionné de production d'enveloppes de l'étape (c) en utilisant des valeurs de ladite déviation maximale mise en rapport à celle-ci par ledit rapport donné et des multiples de ce rapport donné;

(e) de répéter toutes les étapes de procédé susmentionnées séquentiellement en employant une pluralité de gammes de moyenne mouvante (14), chacune desdites gammes étant mises en relation avec ladite première gamme par ledit rapport donné ou par un multiple dudit rapport donné;

(f) de stocker des données dans ledit ordinateur (106) comprenant chaque jeu de lignes qui comporte la moyenne mouvante (14), ses moyennes mouvantes associées (20, 22, 24, 26, 28, 29) et des enveloppes (35, 37; 36, 38);

(g) de répéter systématiquement l'étape de procédé (f) conformément audit rapport donné et aux multiples dudit rapport donné et de stocker dans ledit ordinateur (106) les données ainsi produites; et

(h) d'étendre la gamme dudit premier paramètre pour visualiser sur l'unité de reproduction visuelle (116) dudit ordinateur (106) le prolongement de ladite courbe.

2. Procédé selon la revendication 1, caractérisé en ce que la gamme dudit premier paramètre est étendue par des incréments régulièrement espacés représentant le temps où ledit prolongement de ladite courbe représente une prévision de la valeur dudit autre paramètre.

3. Procédé selon l'une des revendications précédentes, caractérisé en ce que le rapport donné précité est le facteur de Fibonacci (1, 618) et les multiples de celui-ci sont des multiples de puissance.

4. Procédé selon l'une quelconque des revendications précédentes, caractérisé en ce que le procédé est appliqué à un processus industriel ayant un paramètre dépendant du temps, où ledit paramètre est capté à des intervalles de temps espacés pour engendrer une pluralité de points ou de tracés d'une première courbe (10) indiquant la performance historique dudit paramètre en fonction du temps.

5. Système pour la mise en oeuvre du procédé selon la revendication 4, dans le cas où il est nécessaire d'empêcher un paramètre de dépasser ou de descendre en dessous d'une valeur prédéterminée, caractérisé en ce que le système comprend:

(a) des moyens (108) pour surveiller ou contrôler la valeur analogique dudit paramètre;

(b) des moyens (110) pour convertir ladite valeur analogique en une valeur numérique;

(c) des moyens pour introduire ladite valeur dans l'ordinateur (106);

(d) des moyens (112, 114) pour programmer ledit ordinateur (106) pour exécuter ledit procédé conformément à des exigences spécifiques;

(e) des moyens (104) pour effectuer un ajustement de la valeur analogique au cas où l'ordinateur (106) fournit un signal indiquant que la valeur dudit paramètre dépassera probablement ou descendra en dessous de ladite valeur prédéterminée; et

(f) des moyens (112, 114) pour produire des signaux de commande pour effectuer un ajustement dudit paramètre ayant étudié les différents jeux de lignes reproduites sur l'écran de l'unité de reproduction visuelle (116), ou pour permettre à l'ordinateur (106) d'accomplir automatiquement un tel ajustement.

FIG.1

EP 0 169 703 B1

FIG.2

_FIG. 3B._

_FIG. 3A._

FIG.4.